# EUROPÄISCHE PATENTSCHRIFT

(11) **EP 0 794 989 B1**
(45) Veröffentlichungstag und Bekanntmachung des Hinweises auf die Patenterteilung: **25.08.1999**
(21) Anmeldenummer: 95936985.1
(22) Anmeldetag: 27.11.1995
(51) Int. Cl.: C09K 3/10, B65D 17/00

(54) **GETRÄNKEDOSE MIT REDUZIERTER EISENABGABE**
BEVERAGE CAN WITH REDUCED IRON RELEASE
BOITE DE BOISSONS QUI DEGAGE MOINS DE FER

(30) Priorität: 29.11.1994 DE 4442474; 21.07.1995 DE 19526756; 03.11.1995 DE 19541034
(43) Veröffentlichungstag der Anmeldung: 17.09.1997
(73) Patentinhaber: Schmalbach-Lubeca AG, 38112 Braunschweig (DE)
(72) Erfinder: KUTSCHAN, Reinhard, D-38239 Salzgitter (DE); KÖPPE, Sabine, D-53572 Unkel (DE); BAST, Bertold, D-53115 Bonn (DE)
(74) Vertreter: Olgemöller, Luitgard, Dr.
(86) Internationale Anmeldenummer: DE9501671
(87) Internationale Veröffentlichungsnummer: WO9617031

(56) Entgegenhaltungen:
- DE-A- 2 528 643
- DE-A- 4 229 923
- US-A- 3 986 629
- US-A- 4 870 128
- US-A- 5 128 391

## Beschreibung

Das technische Gebiet der Erfindung sind Dosen und insbesondere Getränkedose und Aerosoldosen mit Doppelfalzverschlüssen, die ein Dichtungsmittel ("Compound") im Falz enthalten.

Getränkedosen werden in äußerst großen Stückzahlen hergestellt. Sie werden zumeist als zweiteilige, abgestreckte Dosen gefertigt, bei denen der Rumpf einteilig ausgeführt ist und dieser einteilige Rumpf mit einem Deckel verschlossen wird, unter Bildung eines umlaufenden Doppelfalz-Verschlusses. Auch wenn Aerosoldosen anders gefertigt werden, so treten auch hier Wechselwirkungen zwischen Dosenwandmaterial und Füllgut auf.

Die praktische Erfahrung hat gezeigt, daß bei Füllung der Dosen mit Getränken der Werkstoff der Getränkedose bei den üblichen Lagerzeiten in das Füllgut übergeht. Es ist freilich eine nur geringe Menge, die von dem Füllgut - meist kohlensäurehaltigen Getränken - aufgenommen wird; das beeinträchtigt aber deutlich die Qualität und/oder den Geschmack des Füllgutes. Gleiches gilt für die Abgabe von Dosenwandmaterial in Aerosoldosen; es können aber auch andere Konservendosen betroffen sein.

Die Erfindung hat sich deshalb die **Aufgabe** gestellt, den Übertritt von Bestandteilen des Dosenmaterials in das Füllgut zu reduzieren.

Überraschenderweise konnte diese Aufgabe dadurch gelöst werden, daß eine Getränkedose aus Blech mit Doppelfalzverschluß gemäß Anspruch 1 bereitgestellt wird, bei dem im Falzbereich ein Dichtungswerkstoff enthalten ist, der einen reibungsvermindernden Zusatz aufweist. Das Blech kann insbesondere Aluminium- oder Stahlblech sein.

Kunststoffdichtungsmassen (Compounds) für das Verschließen von Konservendosen sind Stand der Technik. Als Beispiel sei die DE 21 56 238 genannt, die einen thermoplastischen und elastomeren Compound mit einem chlorhaltigen Butadien-Polymeren und Butadien-Styrol-Copolymeren sowie einem kohlenwasserstoffhaltigen fossilen Harz offenbart. Diese Masse kann Hilfsstoffe enthalten, beispielsweise Gleitmittel wie Stearinsäure, und Weichmacher. Allerdings enthalten die konkreten Beispiele keine solchen Hilfsstoffe; diese sind für die Eigenschaften des Compounds selbst nicht von Bedeutung. Wesentlich ist das Erreichen einer erwünschten Thermoplastizität und Klebrigkeit, so daß diese Mischungen in besonderem Maße zum Versiegeln von Konservendosen bei Sterilisationstemperaturen geeignet sind. Hierzu dient das erwähnte Harz, dessen Menge sorgfältig zu wählen ist, da zu geringe Konzentrationen eine Sprödigkeit der Dichtung hervorrufen, während Dichtungen mit zu hohen Mengen des Harzes zum Brüchigwerden neigen.

US-A-3986629 beschreibt Getränkedosen mit Schmelzdichtungen. Es war allerdings bisher nicht bekannt, daß die üblicherweise bisher verwendeten Dichtungen, und nicht nur die zuvor genannte, den Nachteil aufweisen, daß zumindest bei ihrer Anwendung in Getränkedosen oder Aerosoldosen eine nicht zu vernachlässigende Menge an Metall aus dem Dosenmaterial in die Füllung wandert. Unabhängig davon, ob die Menge an Eisen oder Aluminium oder dergleichen aus dem Dosenmaterial als gesundheitlich bedenklich angesehen wird, ist die damit einhergehende Qualitätsminderung doch außerordentlich unerwünscht.

Daß das Zusetzen eines die Reibung vermindernden Mittels zum Falzverschluß-Compound die gestellte Aufgabe lösen würde, war völlig überraschend. Zwar ist der Zusatz von Gleitmitteln zu Compounds für Drehverschluß-Deckel Stand der Technik, allerdings zu dem Zweck, hierbei den richtigen Drehmomentwert einstellen zu können (siehe DE 42 29 923 A1). Auch sind Gleitmittel, wie bereits oben erwähnt, als Hilfsstoffe für die Verarbeitbarkeit des Compounds selbst bereits bekannt.

Jedoch war nicht zu erwarten, daß eine Veränderung des Compounds die Metallabgabe reduzieren würde. Darüberhinaus war ebenfalls überraschend, daß durch die Lehre des Anspruchs 1, eine Veränderung des Compounds zu niedrigeren Reibungswerten, das gewünschte Ergebnis erzielt wird.

Dichtungswerkstoffe ("Compounds") für Bördelränder sind bekannt. Vorliegend wird ein Dichtungswerkstoff bevorzugt, dessen Grundbestandteile chlorfrei und ganz besonders bevorzugt halogenfrei sind. Dies ist erwünscht, weil solche Werkstoffe auch unter extremen Bedingungen kein Halogen abgeben können und dadurch im Bereich der Lebensmittel- und Kosmetikaverpackung besonders vorteilhaft sind. Der Ausdruck "Grundbestandteile" soll den Teil des Werkstoffes angeben, der im wesentlichen für die allgemeinen, d.h. grob klassifizierenden Eigenschaften verantwortlich ist, d.h., dessen Eigenschaften festlegen, ob es sich um thermoplastische, elastomere, teilkristalline Werkstoffe oder dergleichen handelt. Dabei kann der Werkstoff auf der Basis wäßriger Dispersionen oder Emulsionen hergestellt sein. Beispiele hierfür sind gegebenenfalls teilweise oder ganz vernetzte Naturkautschuke oder Synthesekautschuke wie Styrol/Dien-Elastomere, Nitrilkautschuke, Styrol/Dien-Pfropfcopolymere und dergleichen, wobei die Dien-Komponente z.B. Butadien oder Isopren sein kann. Der Werkstoff kann selbstverständlich aber auch mit Hilfe organischer Lösungsmittel hergestellt sein (beispielsweise durch Suspensionspolymerisation oder Polymerisation in Lösung). Beispiele hierfür sind thermoplastische Elastomere wie Dreiblock-Copolymere aus einer zusammenhängenden weichelastischen Phase mit endständigen harten Blöcken. Genannt seien beispielhaft Styrol/Dien/Styrol-Dreiblock-Copolymere wie S/B/S oder S/I/S.

Diesen Grundbestandteilen kann eine Reihe von Zusatzstoffen beigemischt sein, die die Herstellung erleichtern, das Produkt verbilligen oder die Eigenschaften modifizieren oder gewünschte zusätzliche Eigenschaften bewirken können. Beispiele hierfür sind natürliche oder synthetische Harze (wobei unter diesen Begriff keine Reaktionsharze zu verstehen sind; verwiesen wird auf die Definition gemäß Römpps Chemilexikon), Antioxidantien und andere Additive. Compounds können z.B. Alterungsschutzmittel, Verarbeitungshilfsmittel oder, speziell für Wasser-basierende Compounds, Substanzen enthalten, die die Dispersion stabilisieren oder die Verarbeitbarkeit verbessern wie Emulgatoren, Schutzkolloide, Biozide oder Verdicker (z.B. Acrylatverdicker). Weitere Zusatzstoffe sind Füllstoffe. Diese sind meist anorganisch und sollten gegenüber den verpackten Füllgütern beständig sein. Sie können z.B. zur Senkung der Herstellungskosten des Compounds, aber auch zur Verbesserung des Widerstandes gegen den Anpreßdruck der Verschließrollen beim Verschließen der Dosen zugegeben werden. Beispiele sind Kreide, Talkum, Tonerde, z.B. China Clay, Kaolin, Schwerspat und amorphe und pyrogene Kieselsäuren oder Glas. Die Teilchengrößen sind vorliegend bevorzugt <50 µm, stärker bevorzugt <20 µm und ganz besonders bevorzugt <10 µm. Besonders bevorzugt für die vorliegende Erfindung ist es, möglichst gerundete Teilchenformen und insbesondere annähernd oder vollständig runde Formen zu verwenden. Beispielhaft seien hier Glaskügelchen genannt. Die bevorzugten Formen der Füllstoffteilchen tragen zur Reibungsverminderung bei. Zusammen mit den anderen reibungsvermindernden Zusätzen können ggf. synergistische Effekte eintreten.

Der reibungsvermindernde Zusatz kann in einer Ausgestaltung der Erfindung unter niedermolekularen Wachsen ausgewählt sein. Als Beispiele seien genannt: Natürliche Wachse wie pflanzliche Wachse (z.B Carnaubawachs), tierische Wachse (z.B. Lanolin) oder Mineralwachse (z.B. Paraffin- oder Petroleumwachse), chemisch veränderte Wachse wie solche, die durch Oxidation oder Hydrierung (z.B. von Jojoba-Öl) erzeugt sind sowie synthetische Wachse. Die Wachse können Ester oder Amide langkettiger Carbonsäuren sein wie beispielsweise Erucasäureamid, aus niedermolekularen olefinischen Polymeren oder Copolymeren bestehen oder diese umfassen, beispielsweise Polyethylenwachs oder niedermolekulares Polypropylenwachs oder ein niedermolekulares Polymeres aus ein oder mehreren 1 bis 6 C-Atomen enthaltenden Monomeren sein. Ein weiteres Beispiel sind Polyamidwachse. Die Wachse besitzen meist Molekulargewichte von unter 10.000. In einer weiteren Ausgestaltung der Erfindung ist der reibungsvermindernde Zusatz ausgewählt unter mittel- und hochmolekularen Polymeren, die mit den Bestandteilen des Compounds nicht verträglich sind und nicht in die Füllgüter übergehen, jedoch in Form von Teilchen, bevorzugt als Kugeln oder kugelähnliche Teilchen, in den Dichtungsmassen, wie sie oben beschrieben sind, vorliegen. Die Polymeren weisen in der Regel Erweichungspunkte über 70°C auf. Aus Kostengründen bevorzugt man preiswerte Polymere wie Polymere aus einem oder mehreren 1 bis 8 C-Atome enthaltenden olefinisch ungesättigten Monomeren, wie Polyethylen, Polypropylen oder Copolymeren dieser Hauptgruppen, Polyamide, Polyester, Polyvinylester, Poly(meth)acrylate. Besonders bevorzugt sind Homo- oder Copolymerisate Fluor enthaltender olefinisch ungesättigter Monomerer, wie z.B. Polytetrafluorethylen (PTFE). Polytetrafluorethylen ist auch deshalb bevorzugt, weil es nicht nur die Reibungszahl (µ_{D}) des Compounds herabsetzt, sondern auch eine ausgezeichnete Rückprallelastizität (R) aufweist.

Es ist bevorzugt, daß der Zusatz mit dem Compound als solchem nicht verträglich ist, so daß zumindest ein Teil des Zusatzes an die Oberfläche wandert, wodurch insbesondere die äußere Reibung herabgesetzt wird. In einer alternativen Ausführungsform wird reibungsvermindernder Zusatz nachträglich auf der Oberfläche des Compound aufgebracht, wobei bevorzugt aber nicht zwingend notwendigerweise in den Compound selbst bereits ein reibungsvermindernder Zusatz eingearbeitet ist.

Der reibungsvermindernde Zusatz zum Compound hat zumindest die Wirkung, daß dessen Adhäsion im Falz verringert wird. Wahrscheinlich wird auch die innere Reibung herabgesetzt, so daß auch die Kohäsionseigenschaften verändert werden. Die einzusetzende Menge hängt unter anderem von der Zugabe an reibungserhöhenden Teilchen wie Füllstoffen und dergleichen ab. Einsetzbar sind z.B. Mengen im Bereich von etwa 0,1 bis 10 Gew.-%, bezogen auf den Compound. Üblicherweise erzielt man mit 0,2 bis 5 Gew-% sehr gute Ergebnisse.

In einer besonderen Ausführungsform werden Glaskügelchen, bevorzugt mit einem Durchmesser von bis zu 10 µm, besonders bevorzugt bis 3 µm mit PTFE und/oder Wachs beschichtet. Dieser reibungsvermindernde Zusatz ist sehr preisgünstig und verleiht gleichzeitig dem Compound ausgezeichnete Eigenschaften. Eine weitere spezielle Ausgestaltung der Erfindung besteht darin, mindestens einen Zusatz aus der Gruppe der Wachse oder wachsähnlicher Substanzen zusammen mit einem mittel- oder hochmolekularen Polymeren, wie oben beschrieben, einzusetzen.

Das Dichtungsmittel kann - unabhängig von seiner chemischen Zusammensetzung - auf folgende Weise in den Falzbereich des Doppelfalzverschlusses eingebracht werden: Der Verschließkopf einer Verschließmaschine mit dem Deckel wird auf eine Drehzahl gebracht, die etwa derjenigen Drehzahl entspricht, mit der sich der Rumpf auf seinem Tragteller dreht, um erst dann Rumpfhaken und Deckelhaken in (mechanische) Berührung zu bringen, wenn die Differenzdrehzahl klein ist.

### Ausführungsbeispiele

Getränkedosen wurden auf kommerziell betriebenen Anlagen aus Weißblech der Type der Fa. Rasselstein hergestellt. Der Innenlack des Typs 46900 der Fa. ICI wurde wie üblich im Sprayverfahren appliziert. Die Dosen wurden mit Coke bei 14 °C befüllt. Die Deckel waren handelsübliche Deckel (206) mit Durchmesser 57mm, deren Dichtung aus im Mittel ca. 50 mg (trocken) bestand.

Verwendet wurden Dichtungsmassen der Firmen Grace GmbH und DS-Chemie: Vergleichsbeispiel 1 - SLC 9291 ES (Fa. Grace GmbH); Vergleichsbeispiel 2 - WDS 2140 (DS-Chemie).

### Beispiel 1

Es wurde verfahren, wie im Vergleichsbeispiel 1 angegeben, jedoch wurden der Dichtungsmasse vor dem Auftrag auf die Deckel 0,3 Gew.-% Polypropylenwachs zugegeben.

### Beispiel 2

Es wurde verfahren, wie im Vergleichsbeispiel 1 angegeben, jedoch wurde der Dichtungsmasse vor dem Auftrag auf die Deckel 1,0 Gew.-% Polyamidwachs zugegeben.

### Beispiel 3

Es wurde verfahren, wie im Vergleichsbeispiel 1 angegeben, jedoch wurden der Dichtungsmasse vor dem Auftrag auf die Deckel 1,0 Gew.-% PTFE zugegeben.

### Beispiel 4

Es wurde verfahren, wie im Vergleichsbeispiel 2 angegeben, jedoch wurden der Dichtungsmasse vor dem Auftrag auf die Deckel 2,0 Gew.-% PTFE zugegeben.

### Vergleichstest

Jeweils Dosen, hergestellt nach Vergleichsbeispiel 1 sowie entsprechend den Beispielen 1 - 4 wurden verschlossen mit einer Verschließmaschine vom Typ HCM 2000 bei einer Geschwindigkeit von 1500 Dosen/min, einer Temperatur von 14 °C, mit Verschließrollen vom Typ 1379 (Rolle 1) und 160058 (Rolle 2), und bei 37°C und auf dem Deckel stehend gelagert. Nach 6 Monaten wurden folgende Eisenaufnahmen (ppm) ermittelt:

**Tabelle 1**

| | | Eisenaufnahme (ppm) |
|---|---|---|
| Vergleichsbeispiel | 1 | 0,32 |
| | 2 | 0,29 |
| | | |
| Beispiel | 1 | 0,11 |
| | 2 | 0,03 |
| | 3 | 0,06 |
| | 4 | 0,03 |

Tabelle 1 zeigt, daß die Verwendung der Compounds gemäß den Beispielen 1 bis 4 zu einer Reduzierung der Eisenaufnahme auf etwa 10 bis 30% der mit den Standard-Compounds beobachteten Menge führt.

## Patentansprüche

1. Getränkedose aus Blech mit Doppelfalzverschluß, bei dem im Falzbereich ein Dichtungswerkstoff ("Compound"), hergestellt auf der Basis wäßriger Dispersionen oder Emulsionen oder mit Hilfe organischer Lösungsmittel, enthalten ist, der einen reibungsvermindernden Zusatz aufweist.

2. Getränkedose nach Anspruch 1, wobei die Grundbestandteile des Dichtungswerkstoffs ("Compound"), chlorfrei sind.

3. Getränkedose nach Anspruch 1 oder 2, worin der reibungsvermindernde Zusatz ausgewählt ist unter Wachsen mit einem Molekulargewicht von unter 10.000 und mittel- und hochmolekularen Polymeren, die mit den Grundbestandteilen des Compounds nicht verträglich sind, sowie Mischungen davon.

4. Getränkedose nach einem der Ansprüche 1 bis 3, bei der der Compound nach dem Verfalzen zumindest den Bereich des Rumpfhakenradius abdeckt.

5. Getränkedose nach Anspruch 4, bei der der übrige Falzbereich aus üblichem Dichtungswerkstoff besteht.

6. Getränkedose nach einem der voranstehenden Ansprüche, worin der reibungsvermindernde Zusatz mit den übrigen Bestandteilen des Compounds nicht oder nur wenig verträglich ist.

7. Getränkedose nach einem der voranstehenden Ansprüche, worin auf der Oberfläche des Compound ein dort nachträglich aufgebrachter reibungsvermindernder Zusatz vorhanden ist.

8. Getränkedose nach einem der voranstehenden Ansprüche, bei der der reibungsvermindernde Zusatz Polypropylen, Polyethylen, Polyamid und/oder PTFE ist oder enthält.

9. Getränkedose nach einem der voranstehenden Ansprüche, worin der Compound als Grundbestandteil mindestens einen chlorfreien unvernetzten oder vernetzten Natur- oder Synthesekautschuk enthält.

10. Getränkedose nach einem der Ansprüche 9 oder 10, worin der Compound zusätzlich mindestens ein natürliches oder synthetisches Harz aufweist.

11. Getränkedose nach Anspruch 10, worin das Harz ein Kohlenwaserstoffharz ist.

12. Getränkedose nach einem der Ansprüche 9 bis 11, worin der Compound als Grundbestandteil ein Styrol/Dien-Elastomeres enthält.

13. Getränkedose nach einem der Ansprüche 9 bis 11, worin der Compound ein thermoplastisches Elastomeres ist.

14. Getränkedose nach Anspruch 12 oder 13, worin das Dien Isopren oder Butadien ist.

15. Deckel für eine Getränkedose aus Blech mit einem Dichtungswerkstoff ("Compound"), hergestellt auf der Basis wäßriger Dispersionen oder Emulsionen oder mit Hilfe organischer Lösungsmittel, der einen reibungsvermindernden Zusatz wie in einem der Ansprüche 1 bis 14 definiert aufweist.

16. Verwendung eines Dichtungswerkstoffs ("Compounds"), hergestellt auf der Basis wäßriger Dispersionen oder Emulsionen oder mit Hilfe organischer Lösungsmittel, der einen reibungsvermindernden Zusatz enthält, als Dichtungsmittel in Dosen-Doppelfalzverschlüssen aus Blech.

17. Verwendung eines Dichtungswerkstoffs gemäß Anspruch 16, der als Grundbestandteil mindestens einen chlorfreien unvernetzten oder vernetzten Natur- oder Synthesekautschuk enthält.

18. Verwendung eines Dichtungswerkstoffs gemäß Anspruch 16 oder 17, worin der reibungsvermindernde Zusatz ausgewählt ist unter (a) Wachsen mit einem Molekulargewicht von unter 10.000 und (b) mittel- und hochmolekularen Polymeren, die mit den Grundbestandteilen des Compounds nicht verträglich sind, sowie Mischungen davon.

19. Verwendung eines Dichtungswerkstoffs gemäß einem der Ansprüche 16 bis 18, worin der reibungsvermindernde Zusatz Polypropylen, Polyethylen, Polyamid und/oder PTFE ist oder enthält.

## Claims

1. A can for drink, manufactured from sheet metal with a double fold seal, in whose fold area a sealing material ("Compound"), produced on the basis of aqueous dispersions or emulsions or with the aid of organic solvents, is contained, which has a friction-reducing additive.

2. A can for drink according to Claim 1, whereby the basic components of the sealing material ("Compound"), are chlorine-free.

3. A can for drink according to Claim 1 or Claim 2, wherein the friction-reducing additive is selected from waxes with a molecular weight of less than 10,000 and medium and high molecular polymers, which are not compatible with the basic components of the Compound, and mixtures thereof.

4. A can for drink according to one of the Claims 1 to 3, in which the Compound, after folding, covers at least the region of the body hook radius.

5. A can for drink according to Claim 4, in which the remainder of the fold area comprises customary sealing material.

6. A can for drink according to one of the foregoing Claims, wherein the friction-reducing additive is not or only a little compatible with the other components of the Compound.

7. A can for drink according to one of the foregoing Claims, wherein on the surface of the compound a friction-reducing additive is present, applied thereupon subsequently.

8. A can for drink according to one of the foregoing Claims, in which the friction reducing additive is, or includes, polypropylene, polyethylene, polyamide and/or PTFE.

9. A can for drink according to one of the foregoing Claims, in which the Compound comprises a chlorine-free, non cross-linked or cross-linked natural or synthetic rubber.

10. A can for drink according to one of the Claims 9 or 10, in which the Compound has additionally at least one natural or synthetic resin.

11. A can for drink according to Claims 10, wherein the resin is a hydrocarbon resin.

12. A can for drink according to one of the Claims 9 to 11, wherein the Compound includes a styrol/diene elastomer as a basic component.

13. A can for drink according to one of the Claims 9 to 11, wherein the Compound is a thermoplastic elastomer.

14. A can for drink according to Claim 12 or Claim 13, wherein the diene is isoprene or butadiene.

15. A cover for a drinks can of sheet metal with a sealing material ("Compound"), produced on the basis of aqueous dispersions or emulsions or with the aid of organic solvents, which has a friction reducing additive as defined in one of the Claims 1 to 14.

16. The use of a sealing material (Compound"), produced on the basis of aqueous dispersions or emulsions or with the aid of organic solvents, which includes a friction-reducing additive, as the sealing material in double fold can closures from sheet metal.

17. The use of a sealing material according to Claim 16, which comprises as a basic component at least one chlorine free non cross-linked or cross-linked natural or synthetic rubber.

18. The use of a sealing material according to Claim 16 or Claim 17, wherein the friction-reducing additive is selected from (a) waxes with a molecular weight of less than 10,000 and (b) medium and high molecular polymers, which are not compatible with the basic components of the Compound, and mixtures thereof.

19. The use of a sealing material according to one of the Claims 16 to 18, wherein the friction-reducing additive is or includes polypropylene, polyethylene, polyamide and/or PTFE.

## Revendications

1. Boîte de boisson en fer-blanc munie d'une fermeture à double pliage, dans laquelle il y a, dans la zone de pliage, un matériau d'étanchéité ("composé"), préparé à base de dispersions ou d'émulsions aqueuses ou au moyen de solvants organiques, qui présente un additif réduisant le frottement.

2. Boîte de boisson selon la revendication 1, dans laquelle les composants de base du matériau d'étanchéité ("composé") sont exempts de chlore.

3. Boîte de boisson selon la revendication 1 ou 2, dans laquelle l'additif réduisant le frottement est choisi parmi les cires ayant un poids moléculaire inférieur à 10 000 et les polymères de poids moléculaires moyens et élevés, qui ne sont pas compatibles avec les composants de base du composé, ainsi que leurs mélanges.

4. Boîte de boisson selon l'une quelconque des revendications 1 à 3, dans laquelle le composé recouvre au moins la zone du rayon de la partie recourbée du corps de la boîte après le pliage.

5. Boîte de boisson selon la revendication 4, dans laquelle le restant de la zone de pliage est constitué d'un matériau d'étanchéité usuel.

6. Boîte de boisson selon l'une quelconque des revendications précédentes, dans laquelle l'additif réduisant le frottement n'est pas ou seulement peu compatible avec les autres composants du composé.

7. Boîte de boisson selon l'une quelconque des revendications précédentes, dans laquelle il y a sur la surface du composé un additif réduisant le frottement qui y est appliqué par la suite.

8. Boîte de boisson selon l'une quelconque des revendications précédentes, dans laquelle l'additif réduisant le frottement est ou contient du polypropylène, du polyéthylène, un polyamide et/ou du PTFE.

9. Boîte de boisson selon l'une quelconque des revendications précédentes, dans laquelle le composé contient comme composant de base au moins un caoutchouc naturel ou synthétique exempt de chlore non réticulé ou réticulé.

10. Boîte de boisson selon l'une quelconque des revendications 9 ou 10, dans laquelle le composé présente en outre au moins une résine naturelle ou synthétique.

11. Boîte de boisson selon la revendication 10, dans laquelle la résine est une résine hydrocarbonée.

12. Boîte de boisson selon l'une quelconque des revendications 9 à 11, dans laquelle le composé contient comme composant de base un élastomère de styrène-diène.

13. Boîte de boisson selon l'une quelconque des revendications 9 à 11, dans laquelle le composé est un élastomère thermoplastique.

14. Boîte de boisson selon la revendication 12 ou 13, dans laquelle le diène est l'isoprène ou le butadiène.

15. Couvercle pour boîte de boisson en fer-blanc munie d'un matériau d'étanchéité ("composé"), préparé à base de dispersions ou d'émulsions aqueuses ou à l'aide de solvants organiques, qui présente un additif réduisant le frottement tel que défini dans l'une quelconque des revendications 1 à 14.

16. Utilisation d'un matériau d'étanchéité ("composé"), préparé à base de dispersions ou d'émulsions aqueuses ou à l'aide de solvants organiques, qui contient un additif réduisant le frottement, comme agent d'étanchéité dans des fermetures à double pliage de boîtes en fer-blanc.

17. Utilisation d'un matériau d'étanchéité selon la revendication 16, qui contient comme composant de base au moins un caoutchouc naturel ou synthétique exempt de chlore non réticulé ou réticulé.

18. Utilisation d'un matériau d'étanchéité selon la revendication 16 ou 17, dans laquelle l'additif réduisant le frottement est choisi parmi (a) les cires ayant un poids moléculaire inférieur à 10 000 et (b) les polymères de poids moléculaires moyens et élevés, qui ne sont pas compatibles avec les composants de base, et leurs mélanges.

19. Utilisation d'un matériau d'étanchéité selon l'une quelconque des revendications 16 à 18, dans laquelle l'additif réduisant le frottement est ou contient du polypropylène, du polyéthylène, un polyamide et/ou du PTFE.
